**Europäisches Patentamt**

**European Patent Office**

**Office européen des brevets**

(19)

(11) Veröffentlichungsnummer: **0 140 107**
**B1**

(12) **EUROPÄISCHE PATENTSCHRIFT**

(45) Veröffentlichungstag der Patentschrift:
25.02.87

(51) Int. Cl.⁴: **B 25 B 27/30**

(21) Anmeldenummer: **84110985.3**

(22) Anmeldetag: **14.09.84**

(54) Druckfedernspanner, insbesondere für Achsfedern von Kraftfahrzeugen.

(30) Priorität: **04.10.83 DE 3335979**

(43) Veröffentlichungstag der Anmeldung:
**08.05.85 Patentblatt 85/19**

(45) Bekanntmachung des Hinweises auf die Patenterteilung:
**25.02.87 Patentblatt 87/9**

(84) Benannte Vertragsstaaten:
**AT BE CH FR GB IT LI NL SE**

(56) Entgegenhaltungen:
**DE-A-2 525 458**
**DE-A-2 652 820**
**DE-A-2 813 381**
**US-A-4 036 473**

(73) Patentinhaber: **Klann, Horst, Terra- Wohnpark 11,
D-7730 Villingen- Schwenningen 24 (DE)**

(72) Erfinder: **Klann, Horst, Terra- Wohnpark 11, D-7730
Villingen- Schwenningen 24 (DE)**

(74) Vertreter: **Neymeyer, Franz, Dipl.- Ing. (FH),
Haselweg 20, D-7730 Villingen 24 (DE)**

LIBER, STOCKHOLM 1987

EP 0 140 107 B1

**Beschreibung**

Die Erfindung betrifft einen Druckfedernspanner, insbesondere für Achsfedern von Kraftfahrzeugen, bestehend aus zwei koaxial zueinander angeordneten unter Krafteinwirkung axial gegeneinander verschiebbaren Teilen, an denen in deckungsgleicher Anordnung hufeisenartige Greiferklammern auswechselbar befestigt sind, wobei die eine Greiferklammer am Ende eines Rohres und die andere Greiferklammer an einem entlang der Rohrwand dieses Rohres beweglichen Gleitstück befestigt ist und wobei die beiden Greiferklammern kreisbogenförmig verlaufende Klammerschenkel aufweisen, die jeweils im bezug auf eine Scheitelebene symmetrisch angeordnet sind und jeweils mit einer zusammenhängenden, windungsschiefen Auflagefläche für Federwindungsabschnitte versehen sind, die auf ihrer radialen Außenseite von einer Ringwand begrenzt ist und auf ihrer radialen Innenseite eine axial vorspringende zur Scheitelebene wenigstens annähernd symmetrisch angeordnete Stützrippe aufweist.

Druckfedernspanner dieser Art sind an sich bekannt (DE-PS 28 13 381, DE-OS 26 52 820). Bei diesen bekannten Federnspannern sind Greiferklammern vorgesehen, deren ringsektorförmige Auflagefläche sich kreisbogenförmig über einen Winkel von ca. 230° erstreckt und die nahezu über die gesamte Bogenlänge sowohl auf der Innenseite als auch auf der Außenseite von axialen Wandelementen begrenzt ist, so daß das Querschnittsprofil nahezu über die gesamte Länge der Auflagefläche U-förmig ausgebildet ist. Dabei verläuft die an sich windungsschiefe Auflagefläche zumindest im wesentlichen rechtwinklig zur Mittelachse bzw. Scheitelebene der Greiferklammer.

Derartig ausgebildete Greiferklammern sind zwar bestens geeignet, Druckfedern aufzunehmen, deren Durchmesser zumindest annähernd mit dem mitteleren Durchmesser der Auflagefläche übereinstimmt und deren Dicke die Breite der Auflagefläche nicht überschreitet. Wegen der großen Anzahl von Druckfedern mit unterschiedlichen Durchmessern und Querschnittsdicken sind die so geformten Greiferklammern jedoch insofern unbefriedigend, als sie jeweils nur für geringfügig voneinander abweichende Federngrößen verwendet werden können und deshalb in verhältnismäßig großer Anzahl unterschiedlicher Größen zur Verfügung stehen müssen. Es gibt extrem große Schraubendruckfedern in Kraftfahrzeugen mit einem Außendurchmesser von 240 mm, die bei einer Drahtdicke von 15 mm einen Innendurchmesser von 210 mm aufweisen, und extrem kleine Federn, die lediglich einen Außendurchmesser von 120 mm und einen Innendurchmesser von 100 mm aufweisen, sowie Federn, deren Abmessungen zwischen diesen Extremwerten liegen. Um alle diese Federabmessungen mit den herkömmlichen Greiferklammern spannen zu können, waren bisher wenigstens fünf verschiedene Größen von Greiferklammern erforderlich, wobei insbesondere in Grenzfällen häufig die erforderliche Haltesicherheit nicht mehr ausreichend vorhanden war.

Der Erfindung liegt die Aufgabe zugrunde, den Greiferklammern eine verbesserte Form zu geben, um mit ein und derselben Greiferklammer Druckfedern mit größeren Durchmesserunterschieden sicher halten zu können, so daß insgesamt für sämtliche bei Kraftfahrzeugachsen vorkommenden Federgrößen eine möglichst geringe Anzahl unterschiedlich großer Federklammern benötigt wird, d. h. daß beispielsweise drei unterschiedliche Greiferklammergrößen ausreichen, um alle vorkommenden Achsfedern von Kraftfahrzeugen mit optimaler Sicherheit spannen zu können.

Gelöst wird diese Aufgabe erfindungsgemäß dadurch, daß die Stützrippe sich über einen Winkel von wenigstens 30° und maximal 100° ersteckt, - daß die Auflagefläche an den Schenkelenden jeweils um das 1,5-bis 2-fache breiter ist als im Bereich der Scheitelebene und - daß sich die inneren und äußeren Begrenzungskreisbogen der Auflagefläche jeweils nur über 180° erstrecken und jeweils in gerade, zueinander parallele Endkantenabschnitte übergehen.

Durch die sich maximal über einen Winkelbogen von 100° erstreckende Stützrippe, die somit wesentlich kürzer ist als bei den bekannten Druckfedernspannern, wird die Möglichkeit geschaffen, daß mit einer solchen Greiferklammer auch Druckfedern gespannt werden können, deren Innendurchmesser kleiner ist als der doppelte Krümmungsradius der Stützrippe bzw. der inneren Begrenzungskante der Auflagefläche. Das bedeutet, daß man mit einer solchen Greiferklammer Druckfedern sicher spannen kann, die verhältnismäßig stark im Außen- bzw. Innendurchmesser voneinander abweichen.

Eine Vergrößerung der Auflagefläche, die einer Verbesserung der Federwindungsführung an der Greiferklammer dient, wird dadurch erzielt, daß die Auflagefläche an den Schenkelenden jeweils um das 1,5 bis 2 fache breiter ist als im Bereich der Scheitelebene. Dabei ergibt sich der zusätzliche Vorteil, daß sich die Greiferklammer leichter an die ungespannte Feder ansetzen und während der Anfangsphase des Spannvorganges leichter zentrieren lässt.

Dieser Vorteil wird noch dadurch verstärkt, daß sich die inneren und äußeren Begrenzungskreisbogen der Auflagefläche jeweils nur über 180° erstrecken und jeweils in gerade, zueinander parallele Endkantenabschnitte übergehen.

Durch die Neigung der Auflagefläche nach Anspruch 2 ist für die auf ihr aufliegende Federwindung eine radial nach außen abfallende schiefe Ebene gebildet, die einerseits einen gewissen Zentriereffekt ausübt und andererseits die beim Spannen der Feder durch die dabei auftretende Durchmesservergrößerung entstehende Reibung vermindert.

Dabei ist es vorteilhaft, wenn der Neigungswinkel der Auflagefläche gemäß Anspruch 3 auf dem in Spannrichtung vorspringenden Klammerschenkel größer ist als auf dem anderen Schenkel, weil dadurch vermieden werden kann, daß insbesondere die Druckfedern mit dem kleinstmöglichen Innendurchmesser an dem in Spannrichtung nachlaufenden Klammerschenkel sich nicht nur auf der inneren Begrenzungskante der Auflagefläche abstützen,

Dadurch, daß gemäß Anspruch 4 die Länge der jeweils äußeren Randkantenabschnitte etwa der größten Breite entspricht und die jeweils inneren Randkantenabschnitte etwa halb so lang sind, wie die äußeren Randkantenabschnitte, ergibt sich eine weitere Optimierung der Auflagefläche für unterschiedlich große Federn und zugleich eine Erleichterung beim Ansetzen der Greiferklammer an einer Feder.

Um eine möglichst hohe Verankerungssicherheit zwischen der eingespannten Federwindung und der Greiferklammer zu erzielen, ist es wichtig, daß die Endkanten der Stützrippe zumindest annähernd axial bzw. rechtwinklig zur jeweils angrenzenden, inneren Flächenkante der Auflagefläche verlaufen, damit die Federwindung an diesen Randkanten der Stützrippe einen zentrierenden Anschlag findet.

Dadurch, daß in weiterer Ausgestaltung der Erfindung zumindest die Auflagefläche mit einem Belag beschichtet ist, der weicher ist als die Auflagefläche selbst, wobei dieser Belag vorzugsweise aus thermoplastischem Kunststoff besteht, ist einerseits die Gefahr des Verrutschens der von der Greiferklammer gefassten Federwindung verringert und andererseits weitgehend sichergestellt, daß beim Spannen der Feder, die Oberfläche bzw. Haut der Federwindung nicht verletzt wird.

Anhand der Zeichnung wird nun die Erfindung im folgenden näher erläutert. Es zeigt:

Fig. 1 einen Federspanner mit eingespannter Schraubendruckfeder in perspektivischer Darstellung

Fig. 2 eine Greiferklammer in Draufsicht

Fig. 3 einen Schnitt III/III aus Fig. 2

Fig. 4 einen Schnitt IV/IV aus Fig. 2

Fig. 5 eine Seitenansicht A der Fig. 2

Fig. 6 und 7 zwei weitere Greiferklammern unterschiedlicher Größe in Draufsicht

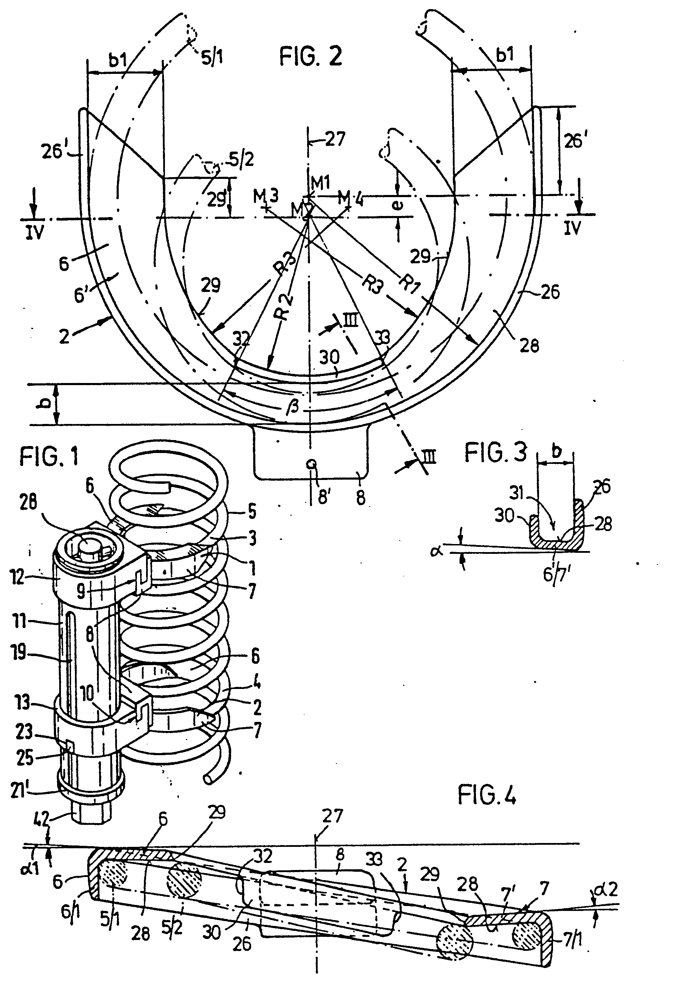

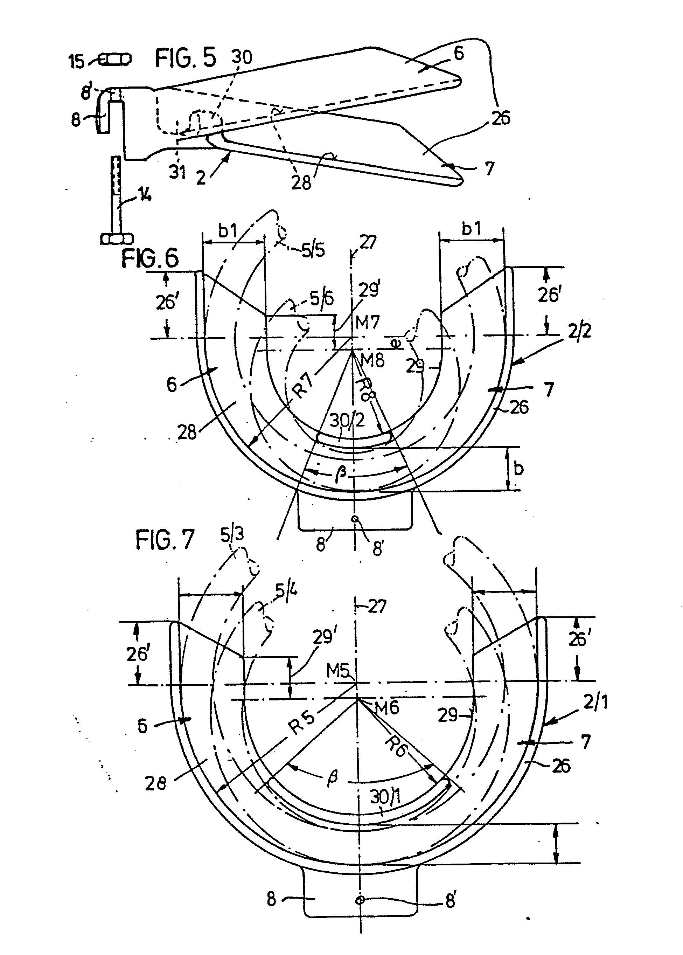

Der in Fig. 1 dargestellte Druckfedernspanner besitzt zwei spiegelbildlich und somit deckungsgleich zueinander angeordnete, im wesentlichen hufeisenartig geformte Greiferklammern 1 und 2 zur Aufnahme jeweils eines Windungsganges 3 bzw. 4 einer Schraubendruckfeder 5. Die beiden Greiferklammern 1 und 2, deren besondere Form nachfolgend anhand der Fig. 2 bis 7 noch näher erläutert wird, sind der Steigung der zu spannenden Schraubendruckfeder 5 entsprechen windungsschief, sodaß jeweils der eine Klammerschenkel 6 in axialer Richtung schräg nach unten bzw. der andere Klammerschenkel 7 schräg nach oben verläuft (Siehe auch Fig. 5). Beide Greiferklammern 1 und 2 sind im wesentlichen gleich ausgebildet und jeweils mit einer hakenförmigen Querleiste 8 versehen, mittels welcher sie jeweils formschlüssig in eine passende Quernut 9 bzw. 10 eines auf einem Führungsrohr 11 gelagerten Hülsenteiles 12 bzw. 13 eingreifen. Mittels lösbarer Schrauben 14 und Muttern 15 wird diese formschlüssige Verbindung zusammengehalten. Der Hülsenteil 12 ist am oberen Ende des Führungsrohres 11 befestigt und sowohl gegen Drehung als auch gegen Axialverschiebung gesichert. Das Führungsrohr 11 ist mit zwei sich diametral gegenüberliegenden Axialnuten 19 versehen, die unterhalb des oberen Hülsenteiles 12 beginnen und bis in die untere Stirnkante des Führungsrohres 11 reichen. Der Hülsenteil 13 ist axial verschiebbar mit einer leichtgängigen Passung auf dem Führungsrohr 11 gelagert und jeweils im Bereich der beiden Axialnuten 19 des Führungsrohres 11 mit den entsprechend breiten Ausnehmungen 23 versehen, in welche querschnittsmäßig angepaßte Radialfinger 25 eines sich im Innern des Führungsrohres 11 befindenden Gleitsteines durch die Axialnuten 19 hindurch hineinragen. Der in der Zeichnung nicht sichtbare Gleitstein ist mit einem zentralen Gewindebohrung versehen, durch welche er mit einer zentrisch im Führungsrohr 11 angeordneten Gewindespindel 28 in Eingriff steht, durch deren Drehung er in der einen oder anderen Richtung gemeinsam mit dem Hülsenteil 13 und der Greiferklammer 2 entlang des Führungsrohres 11 verschiebbar ist. Zu diesem Zweck ist die Gewindespindel 28 an ihrem unteren Ende mit einem Sechskant 42 als Schlüsselprofil versehen. Das untere Ende des Führungsrohres 11 ist mit einer Schraubkappe 21' versehen. In den Querleisten 8 der beiden Greiferklammern 1 und 2 befinden sich jeweils Bohrungen 8' zum Durchstecken der Befestigungsschrauben 14.

Da die beiden Greiferklammern 1 und 2 spiegelbildlich im übrigen aber gleich ausgebildet sind, ist die besondere Formgebung der erfindungsgemäßen Greiferklammern im folgenden nur anhand der jeweils am beweglichen Hülsenteil 13 zu befestigenden Greiferklammer 2 anhand der Fig. 2 bis 7 erläutert. Bei der in den Fig. 2 bis 5 dargestellten Greiferklammer 2 handelt es sich um eine solche, die für besonders große Schraubendruckfedern 5/1 vorgesehen ist, deren Außendurchmesser maximal 240 mm beträgt. Zugleich soll es aber auch möglich sein, mit dieser Greiferklammer 2 Schraubendruckfedern 5/2 von wenigstens 190 mm Außendurchmesser und etwa 160 mm Innendurchmesser zu spannen. Um dies zu ermöglichen und zugleich noch eine ausreichend hohe Sicherheit bezüglich des festen Sitzes der gespannten Feder in der Greiferklammer zu erzielen, weist diese die im folgenden näher erläuterten Besonderheiten in ihrer Formgebung auf.

Die beiden Klammerschenkel 6 und 7, die der Greiferklammer die Grundform eines Hufeisens verleihen, bestehen, wie am besten aus Fig. 4 ersichtlich ist, aus einem L-förmigen Profil mit einem etwa radial verlaufenden Schenkel 6' bzw. 7' und einem axial verlaufenden Schenkel 6/1 bzw. 7/1, die gemeinsam eine Ringwand 26 bilden.

Die in Fig. 2 oben liegende Seite der im Bereich einer Scheitelebene 27 ineinander übergehenden Klammerschenkel 6 und 7 bildet eine Auflagefläche 28, die nicht nur auf die Windungsschiefe einer zu spannenenden Schraubenfeder 5/1 oder 5/2 abgestimmt ist, sondern die auch einen Neigungswinkel α aufweist, der zwischen 2,5° und 6° betragen kann. Dabei ist die Neigung der Auflagefläche 28 so ausgeführt, daß der radial äußere Flächenabschnitt der Auflagefläche 28 bei der Spannbewegung gegenüber der radial inneren Flächenkante 29 nachläuft. Durch diese Neigung der Auflagefläche 28 wird auf die von der Greiferklammer erfasste Windung der zu spannenden Schraubendruckfeder 5/1 bzw. 5/2 ein Zentriereffekt ausgeübt, so daß ein besserer und auch sichererer Sitz des betreffenden Federwindungsabschnittes in der Greiferklammer gewährleistet wird. Im Bereich der Scheitelebene 27 ist entlang der inneren Flächenkante 29 der Auflagefläche 28 eine symmetrisch zur Scheitelebene 27 angeordnete Stützrippe 30 vorgesehen, die zwar parallel zur Ringwand 26 verläuft und sich insgesamt über einen Winkel β von etwa 55° erstreckt. Durch diese verhältnismäßig geringe Bogenlänge der Stützrippe 30 und durch ihre im Bezug auf die Scheitelebene 27 symmetrische Anordnung ist es möglich, auch Schraubenfedern 5/2 mit verhältnismäßig kleinen Innendurchmessern zu erfassen bzw. spannen, sodaß sich diese Greiferklammer für unterschiedlich große Schraubendruckfedern mit verhältnismäßig großen Durchmesserunterschieden eignet. Dabei ist auch wesentlich, daß die im Bereich der Stützrippe 30 zwischen dieser und der Ringwand 26 gebildete Nut 31 eine Breite b aufweist, welche etwa, halb so groß ist, wie die Breite b1, welche die Auflagefläche 28 im Bereich der beiden Klammerschenkelenden besitzt. Durch die Vergrößerung der Breite der Auflagefläche 28 zu den Klammerschenkelenden hin, welche durch die unterschiedlichen Krümmungsradien R1, R2 und R3, sowie durch die versetzten Mittelpunkte M1, M2, M3 und M4 dieser Krümmungsradien R1 bis R3 erzielt wird, ist sichergestellt, daß auch die Schraubendruckfedern 5/2 mit dem kleinstmöglichen Windungsdurchmesser noch über eine Länge auf der Auflagefläche 28 aufliegen, die größer ist als die halbe Windungslänge. Zudem wird durch die Verkleinerung der Auflageflächenbreite b im Bereich der Scheitelebene 27 bzw. der Nut 31 das radiale Spiel, das die Federwindung an dieser Stelle besitzt, auf das Maß verringert, das ausreicht einerseits eine gute Führung der Federwindung zu erzielen und andererseits aber das Einlegen kleinerer Federn nicht behindert. Um auch dem Umstand Rechnung zu tragen, daß beim Spannen der Feder sich die Steigung der Federwindungen verringert und um auch bei unterschiedlichen Ausgangssteigungen von vorne herein eine gute Auflage der Federwindung auf der Auflagefläche 28 zu erzielen, kann es vorteilhaft sein, der Auflagefläche 28 im Bereich der Klammerschenkelenden eine andere Neigung, beispielsweise α 1 und α 2, zu geben als in der Nachbarschaft der Scheitelebene 27 zwar derart, daß der Neigungswinkel α 2, des in Spannrichtung vorspringenden Klammerschenkels 7 größer ist als der Neigungswinkel α 1 der Auflagefläche des anderen Klammerschenkels 6. α 1 kann beispielsweise 2° betragen und α 2 5°.

Wie aus Fig. 2 auch ersichtlich ist, verlaufen die kreisförmigen Krümmungen sowohl der inneren Flächenkante 29 als auch der Ringwand 26 jeweils nur bis in die Höhe der zugehörigen Mittelpunkte M1 bzw. M3 und M4 ihrer Krümmungsradien R1 und R3, also jeweils über einen Winkel von insgesamt 180° und darüber hinaus jeweils parallel zueinander, wobei die geraden Endabschnitte 26' der Ringwand 26 etwa so lang sind wie die Breite b1 der Auflagefläche 28 in diesem Bereich und die geraden Abschnitte 29' der inneren Flächenkante 29 etwa halb so lang sind wie das Maß b1.

Ein weiteres wichtiges, der Haltesicherheit dienendes Merkmal besteht darin, daß die seitlichen Begrenzungskanten 32 und 33 der Stützrippe 30 jeweils zumindest annähernd axial bzw. rechtwinklig zur jeweils angrenzenden Auflagefläche 28 verlaufen, damit die in der Nut 31 liegende Federwindung nicht über die Stützrippe 30 hinwegrutschen kann.

Die Mittelpunkte M1 und M2 der Krümmungsradien R1 und R2 liegen in der Scheitelebene 27 und sind um den Abstand e gegeneinander versetzt. Die beiden Mittelpunkte M3 und M4, der Krümmungsradien R3, welche die Krümmung der inneren Flächenkante 29 der beiden Klammerschenkel 6 und 7 beschreiben, liegen nicht in der Scheitelebene 27 sondern sind jeweils um das gleiche Maß nach links bzw. nach rechts in symmetrischer Anordnung versetzt, sodaß sich die aus Fig. 2 ersichtliche Grundrißform der Greiferklammer 2 ergibt.

Bei der in Fig. 2 dargestellten Greiferklammer beträgt der Innenradius R1 der Ringwand 26 entsprechend dem Außendurchmesser der größten zu spannenden Schraubendruckfeder 5/1 120 mm, während der Innenradius der Stützrippe 30 etwa 84 mm beträgt und die beiden gleichgroßen Krümmungsradien R3 hingegen jeweils etwa 10 mm lang sind.

Die Greiferklammer 2/1 der Fig. 7, die für Schraubendruckfedern mittlerer Größe, d. h. für Schraubendruckfedern 5/3 mit einem maximalen Außendurchmesser von 195 mm und Schraubendruckfedern 5/4 mit einem minimalen Innendurchmesser von 132 mm, verwendet werden soll, weist die innere Flächenkante 29 der Auflagefläche 28 durchgehend den gleichen Krümmungsradius R6 auf, der von einem Mittelpunkt M6 ausgeht, welcher in der gleichen Scheitelebene 27 liegt wie der Mittelpunkt M5 des inneren Krümmungsradius R5 der Ringwand 26. Dabei weist der Radius R5 entsprechend dem Außendurchmesser der größten zu spannenden Druckfeder 5/3 ein Maß von 97,5 mm auf, während der Radius R6 eine Länge von etwa 62 mm besitzt. Die beiden Radienmittelpunkte M5 und M6, sind um den Abstand e, der hier etwa 8 mm beträgt um ein geringeres Maß gegeneinander versetzt, als dies bei der Greiferklammer der Fig. 2 der Fall ist, wo der Abstand e etwa 12 mm groß ist. Bei diesen Größenverhältnissen ergibt sich eine Breite b der zwischen der inneren Stützrippe 30/1 und der Ringwand 26 im Bereich der Scheitelebene 27 von ca. 20 mm, während die Breite b1 der Auflagefläche 28 an den Enden der Klammerschenkel 6 und 7 etwa 34 mm beträgt.

Durch Versuche wurde ermittelt, daß es bei der Greiferklammer dieser Größe am zweckmäßigsten ist, eine Stützrippe 301 vorzusehen.

Aus Übersichtlichkeitsgründen sind in den Fig. 2, 4, 6 und 7 die Druckfedern 5/1 bis 5/6 jeweils in strichpunktierten Linien eingezeichnet.

Insbesondere zum Schutz der Federhaut gegen Verletzung, aber auch um eine größere Haftreibung zu erzielen, sind all die Oberflächen der Greiferklammern 2, 2/1 und 2/2, die mit einer Federwindung in Berührung kommen können, mit einem thermoplastischen Kunstoff überzogen, der jedoch in der Zeichnung nicht dargestellt ist.

Anhand der vorstehend aufgeführten Beispiele ist dargelegt, daß es durch die erfindungsgemäße Ausgestaltung dieser Greiferklammern gelingt, praktisch alle in der Praxis bei Kraftfahrzeugen vorkommenden Schraubendruckfedern, deren Größen zwischen einem maximalen Außendurchmesser von 240 mm und einem minimalen Innendurchmesser von ca. 100 mm liegen, zu erfassen, d.h. spannen zu können und dabei noch jeweils die erforderliche Haltesicherheit zu gewährleisten.

**Patentansprüche**

1. Druckfedernspanner, insbesondere für Achsfedern von Kraftfahrzeugen, bestehend aus zwei koaxial zueinander angeordneten und unter Krafteinwirkung axial gegeneinander verschiebbaren Teilen an denen in deckungsleicher Anordnung hufeisenartige Greiferklammern (1,2) auswechselbar befestigt sind, wobei die eine Greiferklammer (1) am Ende eines Rohres (11) und die andere Greiferklammer (2) an einem entlang der Rohrwand dieses Rohres beweglichen Gleitstück (13) befestigt ist und wobei die beiden Greiferklammern (1,2) kreisbogenförmig verlaufende Klammerschenkel (6,7) aufweisen, die jeweils in bezug auf eine Scheitelebene symmetrisch angeordnet sind und jeweils mit einer zusammenhängenden, windungsschiefen Auflagefläche für Federwindungsabschnitte versehen sind, die wenigstens auf ihrer radialen Außenseite von einer Ringwand begrenzt ist, und auf ihrer radialen Innenseite eine axial vorspringende, zur Scheitelebene wenigstens annähernd symmetrisch angeordnete Stützrippe (30, 30/1, 30/2) aufweist, dadurch gekennzeichnet, - daß die Stützrippe (30, 30/1, 30/2) sich über einen Winkel (β) von wenigstens 30° und maximal 100° erstreckt, daß die Auflagefläche (28) an den Schenkelenden jeweils um das 1,5- bis 2-fache breiter ist als im Bereich der Scheitelebene (27) und

- daß sich die inneren und äußeren Begrenzungskreisbogen der Auflagefläche (28) jeweils nur über 180° erstrecken und jeweils in gerade, zueinander parallele Endkantenabschnitte (26', 29') übergehen.

2. Druckfedernspanner nach Anspruch 1, dadurch gekennzeichnet, daß die Auflagefläche (28) im wesentlichen eben ist und jeweils wenigstens im Bereich der Scheitelebene (27) und entlang des aufgrund seiner Windungsschiefe in Spannrichtung vorspringenden Klammerschenkels (7) derart um einen Neigungswinkel (α, α1, 2) zwischen 2,5° und 6° geneigt ist, daß der radial äußere Flächenabschnitt bei der Spannbewegung gegenüber der radial inneren Flächenkante (29) nachläuft.

3. Druckfedernspanner nach Anspruch 1 oder 2, dadurch gekennzeichnet, daß der Neigungswinkel (α 2) der Auflagefläche (28) auf dem in Spannrichtung vorspringenden Kammerschenkel (7) größer ist als der Neigungswinkel (α 1) auf dem anderen Klammerschenkel (6).

4. Druckfedernspanner nach einem der Ansprüche 1, 2 oder 3, dadurch gekennzeichnet, daß die Länge der jeweils äußeren Randkantenabschnitte (26') etwa der größten Breite (b1) entspricht und die jeweils inneren Randkantenabschnitte (29') etwa halb so lang sind wie die äußeren Randkantenabschnitte (26').

5. Druckfedernspanner nach einem der Ansprüche 1 bis 4, dadurch gekennzeichnet, daß die Endkanten (32, 33) der Stützrippe (30, 30/1, 30/2) zumindest annähernd axial bzw. rechtwinklig zur jeweils angrenzenden inneren Randkante (29) der Auflagefläche (28) verlaufen.

6. Druckfedernspanner nach einem der Ansprüche 1 bis 5, dadurch gekennzeichnet, daß zumindest die Auflagefläche (28) mit einem Belag beschichtet ist, der weicher ist als die Auflagefläche (28) selbst.

7. Druckfedernspanner nach Anspruch 6, dadurch gekennzeichnet, daß der Belag aus einem thermoplastischen Kunststoff besteht.

### Claims

1. Spring compressor, particularly for axle springs of motor vehicles, consisting of two coaxially disposed parts which are adapted for axial movement in respect of each other when force is applied and on which are coincidentally mounted stirrup-shaped gripper clamps (1, 2), one gripper clamp (1) being fixed at the end of one tube (11), the other gripper clamp (2) being fixed on a sliding member (13) adapted for movement along the wall of this tube, the two gripper clamps (1, 2) comprising arcuately extending clamp arms (6, 7) which are respectively symmetrically disposed with regard to a vertex plane, being in each case provided with a cohesive coilwise-oblique supporting surface for portions of spring coils and bounded at least on their radial outer side by an annular wall (26) and having on their radially inner side an axially projecting thrust rib (30, 30/1, 30/2) disposed at least approximately symmetrically in relation to the vertex plane, characterised
- in that the thrust rib (30, 30/1, 30/2) extends over an angle (β) of at least 30 degrees and not more than 100 degrees.
- and in that the supporting surface (28) is at the arm ends in each case 1.5 to 2 times wider than in the region of the vertex plane (27) and
- in that the inner and outer arcuate boundaries of the supporting surface (28) in each case extend over just 180 degrees merging in each case into straight mutually parallel end edge portions (28', 29')

2. Spring compressor according to Claim 1 characterised in that the supporting surface (28) is substantially plane and is in each case, at least in the region of the vertex plane (27) and along the clamp arm (7) which projects in the clamping direction by virtue of the obliquity, by an angle of inclination (α, α 1, 2) of between 2.5 degrees and 6 degrees and in that the radially outer portion of the surface, during the clamping movement, trails the radially inner edge (29) of the surface.

3. Spring compressor according to Claim 1 or 2, characterised in that the angle of inclination (α 2) of the supporting surface (28) is, on the clamp arm (7) projecting in the clamping direction, greater than the angle of inclination (α 1) on the other clamp arm (6).

4. Spring compressor according to one of Claims 1, 2 or 3, characterised in that the length of whichever is the outer edge portion (26') corresponds substantially, to the greatest width (b1) while whichever is the inner edge portion (29') is substantially half as long as the outer edge portions (26').

5. Spring compressor according to one of Claims 1 to 4, characterised in that the end edges (32, 33) of the thrust rib (30, 30/1. 30/2) extend at least approximately axially or at a right angle to whichever is the adjacent inner edge (29) of the supporting surface (28).

6. Spring compressor according to one of Claims 1 to 5, characterised in that at least the supporting surface (28) is coated with a lining which is softer than the supporting surface (28) itself.

7. Spring compressor according to Claim 6, characterised in that the lining consists of a thermoplastics synthetic material.

### Revendications

1. Compresseur de ressorts, pour des ressorts d'essieux de véhicules notamment, composé de deux éléments coaxiaux, dotés d'une possibilité de déplacement mutuel et axial sous l'effet d'une force, sur lesquels sont fixées des brides à griffes (1, 2) interchangeables, en forme de fer à cheval et coïncidentes, ces deux brides (1, 2) étant respectivement fixées à l'extrémité d'un tube (11) et sur une pièce coulissante (13), qui se déplace sur la paroi de ce tube, et présentant des branches (6, 7) en arc de cercle, symétriques par rapport à un plan de partage et dotées d'une surface d'appui continue, hélicoïdale, pour les sections de spire du ressort, cette surface étant limitée par une paroi annulaire (26) sur son côté radial externe et présentant une nervure d'appui (30, 30/1, 30/2) en saillie axiale, au moins pratiquement symétrique par rapport au plan de partage, sur son côté radial interne, caractérisé en ce que la nervure d'appui (30, 30/1, 30/2) s'étend sur un angle (α) de 30° au moins et de 100° au maximum, en ce que la largeur de la surface d'appui (28) sur les extrémités de branches est de 1,5 à 2 fois plus élevée que dans la zone du plan de partage (27), et en ce que les arcs de cercle limites de la surface d'appui (28), intérieurs et extérieurs, ne s'étendent que sur 180° et se prolongent par des sections de bords extrêmes linéaires (26', 29'), parallèles entre elles.

2. Compresseur de ressorts suivant la revendication 1, caractérisé en ce que la surface d'appui (26), essentiellement plane, présente un angle d'inclinaison (α, α 1, α 2) compris entre 2,5° et 6°, au moins dans la zone du plan de partage (27) et sur la branche (7), en avant dans le sens de compression par suite de sa forme hélicoïdale, de telle sorte que la section radiale externe succède au bord radial interne (29) dans le mouvement de compression.

3. Compresseur de ressorts suivant l'une des revendications 1 et 2, caractérisé en ce que l'angle d'inclinaison (α 2) de la surface d'appui (28) sur la branche (7), en avant dans le sens de compression, est supérieur à l'angle d'inclinaison (α 1) sur l'autre branche (6).

4. Compresseur de ressorts suivant l'une quelconque des revendications 1 à 3, caractérisé en ce que la longueur des sections de bords externes (26') correspond à peu près à la largeur maximale (b1), les sections de bords internes (29') étant pratiquement deux fois moins longues que les sections précitées (26').

5. Compresseur de ressorts suivant l'une quelconque des revendications 1 à 4, caractérisé en ce que les bords extrêmes (32, 33) de la nervure d'appui (30, 30/1, 30/2) sont du moins pratiquement axiaux et/ou perpendiculaires au bord interne adjacent (29) de la surface d'appui (28).

6. Compresseur de ressorts suivant l'une quelconque des revendications 1 à 5, caractérisé en ce que la surface d'appui (28) du moins est munie d'un revêtement, plus souple que cette surface (28).

7. Compresseur de ressorts suivant la revendication 6, caractérisé en ce que le revêtement est en thermoplastique.

FIG. 2

FIG. 1

FIG. 3

FIG. 4

FIG. 5

FIG. 6

FIG. 7